(19) Europäisches Patentamt
European Patent Office
Office européen des brevets

(11) **EP 2 448 212 A1**

(12) # EUROPEAN PATENT APPLICATION
published in accordance with Art. 153(4) EPC

(43) Date of publication:
**02.05.2012  Bulletin 2012/18**

(21) Application number: **10826096.9**

(22) Date of filing: **28.10.2010**

(51) Int Cl.:
***H04L 29/06*** (2006.01)

(86) International application number:
**PCT/CN2010/078197**

(87) International publication number:
**WO 2011/050733 (05.05.2011 Gazette 2011/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2009  CN 200910110434**

(71) Applicant: **Huawei Technologies Co., Ltd.
Guangdong 518129 (CN)**

(72) Inventors:
• **LI, Xiaojin
  Guangdong 518129 (CN)**

• **ZHU, Haopeng
  Guangdong 518129 (CN)**
• **WANG, Xinyong
  Guangdong 518129 (CN)**

(74) Representative: **Epping, Wilhelm
Epping Hermann Fischer
Patentanwaltsgesellschaft mbH
Ridlerstrasse 55
80339 München (DE)**

(54) **COMMUNICATION METHOD, APPARATUS AND SYSTEM FOR INTERNET PROTOCOL (IP) MULTIMEDIA SUBSYSTEM (IMS) CENTRALIZED SERVICES**

(57)    Embodiments of the present invention provide a communication method, apparatus, and system for Internet Protocol Multimedia Subsystem (IMS) Centralized Services (ICS). The method includes: receiving, by an ICS communication apparatus, a Register request message that carries an identification of an ICS subscriber and access network side address information of the subscriber; determining whether the Register request message is a periodical Register request message; and if determining that a periodical Register request message is received, judging whether the access network side address information of the subscriber carried in the Register request message is the same as access network side address information of the subscriber recorded by an IMS core network, and if the access network side address information of the subscriber carried in the Register request message is different from the access network side address information of the subscriber recorded by the IMS core network, rejecting the Register request message.

FIG. 2

## Description

This application claims priority to Chinese Patent Application No. 200910110434.6, filed with the Chinese Patent Office on Oct. 29, 2009 and entitled "COMMUNICATION METHOD, APPARATUS, AND SYSTEM FOR IMS CENTRALIZED SERVICES", which is incorporated herein by reference in its entirety.

## FIELD OF THE INVENTION

The present invention relates to the field of communication technologies, and in particular, to a communication method, apparatus, and system for IMS centralized services.

## BACKGROUND OF THE INVENTION

With the continuous evolution and development of the Internet Protocol (IP) Multimedia Subsystem (IMS), the Circuit Switched (CS) domain network and the IMS network are in co-existence for a long time. To realize seamless and efficient interoperation between different access modes so that services are uniformly controlled by the IMS network to enable IMS centralized services (ICS), a Mobile Access Gateway Control Function (mAGCF) needs to be introduced to connect traditional CS subscribers to the IMS network. The mAGCF is usually implemented by a Mobile Switching Center (MSC) Server Enhanced for ICS.

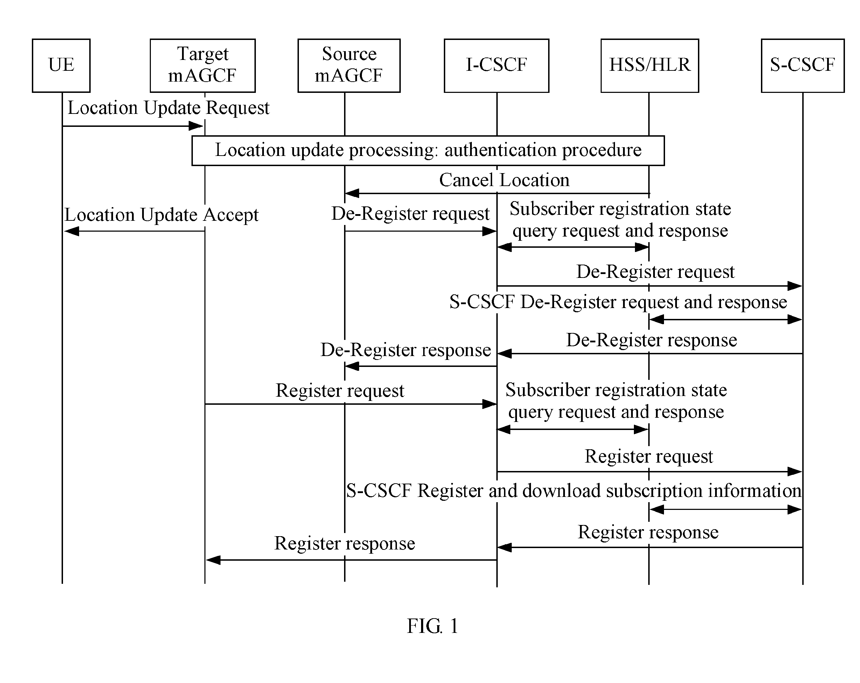

FIG. 1 is a flowchart of an inter-network handover of an ICS subscriber described in 3GPP TS23292 v9.0.0. When a mobile subscriber (ICS subscriber) roams between networks, the mobile station sends a location update request message to the target mAGCF and completes an authentication procedure with the help of a Home Location Register (HLR); the HLR sends a Cancel Location message to a source mAGCF according to previously recorded information of the source mAGCF, requesting to cancel the subscriber information; the source mAGCF receives the message and sends a De-Register message to an Interrogating-Call Session Control Function (I-CSCF); the I-CSCF receives the De-Register message and queries a Home Subscriber Server (HSS) to obtain the address of a Serving-Call Session Control Function (S-CSCF), and forwards the De-Register message to the S-CSCF which processes the de-registration (namely, cancel the binding between the source mAGCF and the S-CSCF); after receiving the location update request message of the mobile subscriber, the target mAGCF sends a Register message to the I-CSCF, and the I-CSCF queries the HSS to obtain the address of the S-CSCF and forwards the Register message to the S-CSCF which completes processing the registration.

The prior art has the following disadvantages: if the source mAGCF does not receive the Cancel Location message from the HLR, the source mAGCF cannot normally de-register with the S-CSCF; in this case, if the ICS subscriber is called, because the IMS core network cannot correctly determine the mAGCF of the ICS subscriber, the put-through rate of the ICS subscriber as a called party is greatly reduced and generally speaking, the failure rate is about 50%.

## SUMMARY OF THE INVENTION

Embodiments of the present invention provide a communication method for increasing the put-through rate of an ICS subscriber as a called party when the ICS subscriber roams between different systems.

An embodiment of the present invention provides an ICS communication method, including:

receiving, by an ICS communication apparatus, a Register request message that carries an identification of an ICS subscriber and access network side address information of the subscriber;
determining whether the Register request message is a periodical Register request message; and
if determining that a periodical Register request message is received, judging whether the access network side address information of the subscriber carried in the Register request message is the same as access network side address information of the subscriber recorded by an IMS core network, and if the access network side address information of the subscriber carried in the Register request message is different from the access network side address information of the subscriber recorded by the IMS core network, rejecting the Register request message.

An embodiment of the present invention provides an ICS communication apparatus, including:

a receiving unit, configured to receive a Register request message that carries an identification of an ICS subscriber and access network side address information of the subscriber;
a first determining unit, configured to determine whether the Register request message is a periodical Register request message;

a second determining unit, configured to, when the first determining unit determines that a periodical Register request message is received, judge whether the access network side address information of the subscriber carried in the Register request message is the same as access network side address information of the subscriber recorded by an IMS core network; and

a rejecting unit, configured to reject the Register request message when the second determining unit determines that the access network side address information of the subscriber carried in the Register request message is different from the access network side address information of the subscriber recorded by the IMS core network.

An embodiment of the present invention provides an ICS communication system, including:

a mobile access gateway control apparatus, configured to send a Register request message that carries an identification of an ICS subscriber and access network side address information of the subscriber; and

an ICS communication apparatus, configured to receive the Register request message, determine whether the Register request message is a periodical Register request message, and if determining that a periodical Register request message is received, judge whether the access network side address information of the subscriber carried in the Register request message is the same as access network side address information of the subscriber recorded by an IMS core network, and if the access network side address information of the subscriber carried in the Register request message is different from the access network side address information of the subscriber recorded by an IMS core network, reject the Register request message.

An embodiment of the present invention provides a mobile access gateway control apparatus, including:

a sending unit, configured to send a Register request message, which carries an identification of an ICS subscriber and access network side address information of the subscriber, and an attribute indication of the Register request to an ICS communication apparatus; and

a receiving unit, configured to receive a rejection message which is sent by the ICS communication apparatus and in response to the Register request message after the ICS communication apparatus determines, according to the attribute indication of the Register request, that the Register request message is a periodical Register request message and when the ICS communication apparatus judges that the access network side address information of the subscriber carried in the Register request message is different from access network side address information of the subscriber recorded by an IMS core network.

It can be known that, according to the embodiments of the present invention, when an ICS subscriber roams between different systems, even if the source mAGCF fails to de-register with the IMS core and continues requesting periodical registration, the IMS core may still differentiate a periodical Register request message initiated by the source mAGCF that is not successfully de-registered and therefore avoid refresh of the incorrect mAGCF, so that the put-through rate of a roaming ICS subscriber as a called party is guaranteed and unnecessary waste of communication resources is avoided.

## BRIEF DESCRIPTION OF THE DRAWINGS

FIG. 1 is a schematic flowchart of a registration procedure of an ICS subscriber roaming between different systems in a prior art;
FIG. 2 is a schematic flowchart of an ICS communication method according to a first embodiment of the present invention;
FIG. 3 is a schematic flowchart of an ICS communication method according to a second embodiment of the present invention;
FIG. 4 is a structure diagram of an ICS communication apparatus according to an embodiment of the present invention;
FIG. 5 is a structure diagram of an ICS communication system according to an embodiment of the present invention; and
FIG. 6 is a structure diagram of a mobile access gateway control apparatus according to an embodiment of the present invention.

**DETAILED DESCRIPTION OF THE EMBODIMENTS**

To make the foregoing characteristics and advantages of the present invention clearer, the embodiments of the present invention are described in detail with reference to the accompanying drawings.

After the initial registration of an ICS subscriber with an IMS core is successful, an mAGCF of the subscriber needs to start a registration refresh timer according to the parameter Expires (or an Expires header field) negotiated during the initial registration. If the timer duration is shorter than or equal to 1,200 seconds, the mAGCF needs to send a periodical Register request message when half of the timer duration expires; if the timer duration is longer than 1,200 seconds, the mAGCF needs to send a periodical Register request message 600 seconds before the timer expires. When the ICS subscriber roams between different systems, even when the source mAGCF does not receive a Cancel Location message from the HLR, the source mAGCF still starts the registration refresh timer and sends a periodical Register request message to the I-CSCF before the registration refresh timer expires. Upon reception of the periodical Register message, the I-CSCF completes refreshing the registration with the S-CSCF. If the periodical registration happens after a registration initiated by a target mAGCF, the S-CSCF refreshes the recorded target mAGCF as the source mAGCF. Then, if another subscriber originates a call to the ICS subscriber, because the subscriber has roamed to the target mAGCF but what is recorded by the S-CSCF is the source mAGCF, the call originated to the subscriber fails.

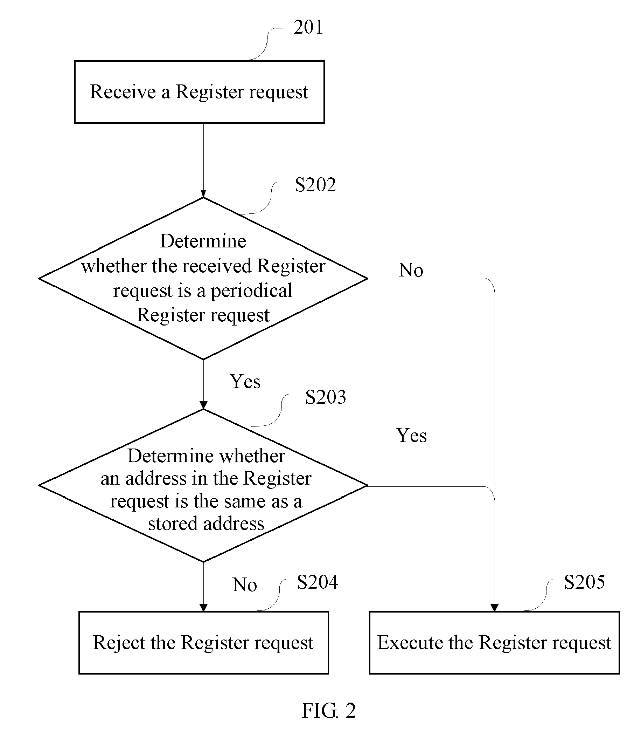

To solve the foregoing problem, as shown in FIG. 2, a first embodiment of the present invention provides an ICS communication method, including the following steps:

Step S201: Receive a Register request message that carries an identification of an ICS subscriber and access network side address information of the subscriber.

Step S202: Determine whether the received Register request message is a periodical Register request message.

Step S203: If determining that a periodical Register request message is received, judge whether the access network side address information of the subscriber in the Register request message is the same as access network side address information of the subscriber stored by an IMS core network.

Step S204: If judging that the access network side address information of the subscriber in the Register request message is different from the access network side address information of the subscriber stored by the IMS core network, reject the Register request message.

The method according to the embodiment of the present invention may further include step S205 to execute the Register request message. In the foregoing step S202, if it is judged that the Register request message is not a periodical Register request message, it may be determined that the Register request message is an initial Register request message. In this case, step S205 may be performed to execute the Register request message and refresh the mAGCF address recorded by the IMS core as the address information carried in the Register request message. Additionally, in step S203, if it is judged that the access network side address information in the periodical Register request message is the same as the access network side address information recorded by the IMS core, the procedure may proceed to step S205 to execute the Register request message.

The steps in the foregoing embodiment of the present invention are executed by a network element in the IMS core. The network element may be an I-CSCF or S-CSCF. If the network element is an I-CSCF, the I-CSCF needs to obtain from the S-CSCF the address information of the mAGCF stored by the S-CSCF. In the foregoing embodiment of the present invention, after receiving a Register request message, the IMS core first determines whether the message is an initial Register request message or a periodical Register request message. If the message is a periodical Register request message, the IMS core needs to further judge whether the mAGCF address to be refreshed is the same as the stored mAGCF address. If the mAGCF address to be refreshed is different from the stored mAGCF address, the IMS core may determine that the periodical Register request message is not a legal registration, and therefore reject the periodical registration. Thereby, when an ICS subscriber roams between different systems, even if the source mAGCF fails to de-register with the IMS core and continues requesting periodical registration, the IMS core may still differentiate a periodical Register request message initiated by the source mAGCF that is not successfully de-registered and therefore avoid refresh of the incorrect mAGCF, so that the call put-through rate of a roaming ICS subscriber as a called party is guaranteed and unnecessary waste of communication resources is avoided.

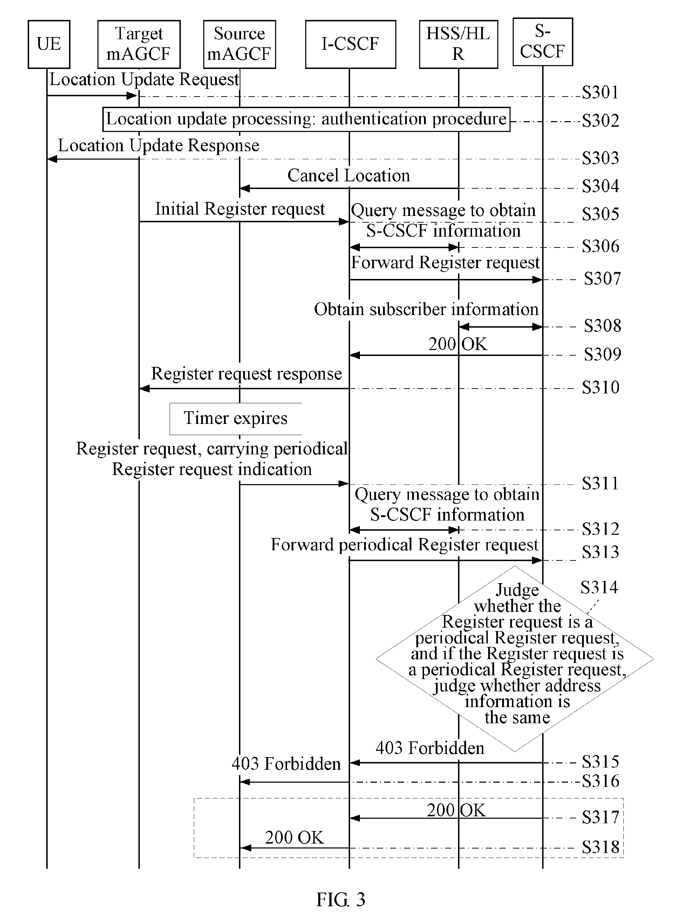

FIG. 3 is a signaling flowchart of an ICS communication method according to a second embodiment of the present invention. The method includes the following steps:

Step S301: When a mobile ICS subscriber roams between different systems, the subscriber sends a location update request message to a target mAGCF through a terminal.

Step S302: Complete an authentication procedure with the help of an HLR and authenticate an identity and right of the subscriber.

Step S303: The target mAGCF returns a location update response message to the subscriber.

Step S304: The HLR sends a Cancel Location message to the source mAGCF according to the recorded source mAGCF information, requesting to de-register the subscriber information. In the embodiment of the present invention, the message fails to reach the source mAGCF because of a broken link. That is, the source mAGCF cannot receive the Cancel Location message.

Step S305: The target mAGCF sends a Register request message to an I-CSCF, where the message carries the identification and authentication information of the subscriber and address information of the target mAGCF (Contact header field) of the current Register request message.

Step S306: The I-CSCF queries an HSS to obtain an address of an S-CSCF.

Step S307: The I-CSCF forwards the Register message to the S-CSCF.

Step S308: The S-CSCF downloads related information (subscription information, security information, and other information) of the subscriber from the HSS and stores the information in a database of the S-CSCF; the S-CSCF records the current mAGCF of the subscriber as the target mAGCF.

Step S309: The S-CSCF returns a 200 OK response message to the I-CSCF.

Step S310: The I-CSCF returns a Register Response message to the target mAGCF, indicating completion of the registration.

Step S311: Because the source mAGCF does not receive the Cancel Location message, the source mAGCF starts a registration refresh timer according to the Expires value negotiated at the initial registration. When the timer expires, the source mAGCF sends a periodical Register request message which carries the identification and authentication information of the subscriber and the address information of the source mAGCF (Contact header field) of the current Register request message, and an attribute indication of the Register request. The attribute indication of the Register request is used to indicate that the Register request message is a periodical Register request message. In this step, the Register request message needs to be extended to carry the attribute indication of the Register request. For example, the indication information is carried in an extended header field of the Register request message, or in an extended parameter of the Register request message. In a specific implementation of the embodiment of the present invention, a new P- Periodic-Refresh header field is extended to carry the indication information. The syntactic structure of the P- Periodic-Refresh header field is as follows:

$$P\text{- Periodic-Refresh} = \text{"P- Periodic-Refresh" HCOLON [em-param *(COMMA em-param) ]}$$

$$\text{em-param} = \text{"registration" / token}$$

In the second embodiment of the present invention, when the mAGCF initiating the registration sends a Register request of the subscriber (before, after or at the same time when the message is sent), the mAGCF determines whether the message needed to be sent currently is a periodical Register request message or an initial Register request message; if determining that the Register request message is a periodical Register request message, the mAGCF carries an attribute indication in the Register request message, indicating that the Register request message is a periodical Register request message; if determining that the Register request message is an initial Register request message, the mAGCF may carry an attribute indication in the Register request message, indicating that the Register request message is an initial Register request message, or carry no attribute indication in the Register request message, but in this case, the mAGCF needs to configure that the Register request message carrying no attribute indication is an initial Register request by default. Or, the mAGCF initiating the registration carries an attribute indication in an initial Register request message, indicating that the requested registration is an initial registration; if the message received by the IMS core carries no attribute indication, the IMS core may determine that the message is a periodical Register request message. Therefore, the attribute indication of the Register request in the embodiment of the present invention is used to indicate the attribute of the Register request message or indicate whether the Register request message is a periodical Register request message; after receiving the attribute indication of the Register request, the IMS core judges, according to the attribute indication of the Register request, whether the current registration is a periodical registration.

In other embodiments of the present invention, the source mAGCF may also carry no attribute indication of the Register request in the Register request message, but instead, before or after sending the Register request message, sends an attribute indication of the currently sent Register request message; after obtaining the attribute indication of the Register request, the IMS core judges, according to the attribute indication of the Register request, whether the current registration is a periodical registration.

Step S312: The I-CSCF queries the HSS to obtain the address of the S-CSCF.

Step S313: The I-CSCF forwards the periodical Register request message to the S-CSCF.

Step S314: After receiving the periodical Register request message, the S-CSCF determines, according to the attribute indication of the Register request carried in the request message, that the received Register request message is a periodical Register request message, and then judges whether the access network side address information of the subscriber carried in the Register request message is the same as the access network side address information of the subscriber recorded by the IMS core network. Specifically in this embodiment, the S-CSCF further obtains the recorded mAGCF address information of the subscriber according to the subscriber identification carried in the periodical Register request message and determines whether the obtained address information is the same as the mAGCF address information carried in the periodical Register request message; if the obtained address information is different from the mAGCF address information carried in the periodical Register request message, the procedure proceeds to step S315; if the obtained address information is the same as the mAGCF address information carried in the periodical Register request message, the procedure proceeds to step S317.

Step S315: The S-CSCF rejects the periodical Register request message and returns a 403 Forbidden message to the I-CSCF.

Step S316: The I-CSCF returns a 403 Forbidden message to the source mAGCF.

Step S317: The S-CSCF executes the periodical Register request message and returns a 200 OK message to the I-CSCF.

Step S318: The I-CSCF returns a 200 OK message to the source mAGCF.

After sending the periodical Register request message, if receiving a 200 OK response, the source mAGCF continues with subsequent processing in compliant with the protocol (for example, storing the registration duration and the Service Route header field); if receiving a 403 Forbidden response, the source mAGCF may further judge the state of the subscriber; if determining that the subscriber is in an attached state, the mAGCF resends an initial Register request message to the IMS core so as to ensure that the subscriber is successfully registered with the network.

In the second embodiment of the present invention, corresponding operations are performed after differentiating initial registration and periodical registration on the S-CSCF, but such differentiation and the judgment of the mAGCF address may also be performed by other network elements in the IMS core.

According to the second embodiment of the present invention, when an ICS subscriber roams between different systems, even if the source mAGCF fails to de-register with the IMS core and continues requesting periodical registration, the IMS core may still differentiate a periodical Register request message initiated by the source mAGCF that is not successfully de-registered and therefore avoid refresh of the incorrect mAGCF, so that the call put-through rate of a roaming ICS subscriber as a called party is guaranteed and unnecessary waste of communication resources is avoided. Meanwhile, in the embodiment of the present invention, an extended Register request message or a message sent before or after the Register request message is used to carry an attribute indication of the Register request, so that the IMS core network knows the attribute of the Register request message and continues to check the legality of a periodical Register request message, thereby avoiding refresh of the incorrect mAGCF.

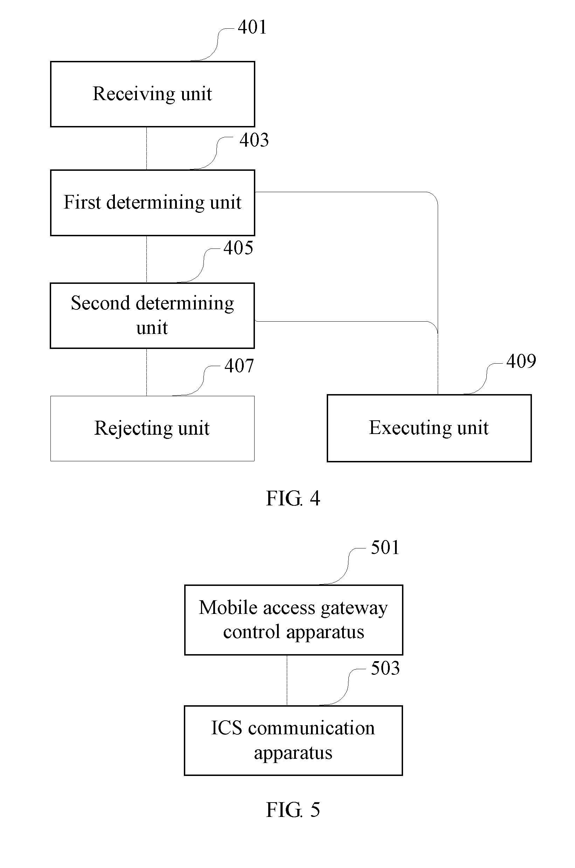

An embodiment of the present invention further provides an ICS communication apparatus. The apparatus is a network element in an IMS core network, which may be an S-CSCF, I-CSCF, or Application Server (AS). As shown in FIG. 4, the apparatus includes:

a receiving unit 401, configured to receive a Register request message that carries an identification and access network side address information of an ICS subscriber; a first determining unit 403, configured to determine whether the Register request message is a periodical Register request message; a second determining unit 405, configured to, when the first determining unit determines that a periodical Register request message is received, judge whether the access network side address information of the subscriber carried in the Register request message is the same as access network side address information of the subscriber recorded by the IMS core network; and a rejecting unit 407, configured to, when the second determining unit determines that the access network side address information of the subscriber carried in the Register request message is different from the access network side address information of the subscriber recorded by the IMS core network, reject the Register request message.

In the embodiment of the present invention, the receiving unit 401 is further configured to obtain an attribute indication of the Register request which is used to indicate whether the Register request message is a periodical Register request message; and the first determining unit 403 determines, according to the attribute indication of the Register request, whether the received Register request message is a periodical Register request message.

The apparatus may further include an executing unit 409, configured to execute the Register request message when the first determining unit 403 determines that the received Register message is not a periodical Register request message, or when the second determining unit 405 determines that the access network side address information of the subscriber carried in the periodical Register request message is the same as the access network side address information of the subscriber recorded by the IMS core network.

According to the embodiment of the present invention, the IMS core network is able to differentiate the attribute of a Register request message and further check the legality of the message if it is a periodical Register request message, thereby avoiding refresh of the incorrect mAGCF and ensuring the call put-through rate.

As shown in FIG. 5, an embodiment of the present invention further provides an ICS communication system, including:

a mobile access gateway control apparatus 501, configured to send a Register request message that carries an identification and access network side address information of an ICS subscriber; and

an ICS communication apparatus 503, configured to receive the Register request message, determine whether the Register request message is a periodical Register request message, and if determining that a periodical Register request message is received, judge whether the access network side address information of the subscriber carried in the Register request message is the same as access network side address information of the subscriber recorded by the IMS core network, and if the access network side address information of the subscriber carried in the Register request message is different from the access network side address information of the subscriber recorded by the IMS core network, reject the Register request message.

The mobile access gateway control apparatus 501 is further configured to send an attribute indication of the Register request which is used to indicate whether the Register request message is a periodical Register request message; the ICS communication apparatus 503 determines, according to the attribute indication of the Register request, whether the received Register request message is a periodical Register request message; the mobile access gateway control apparatus 501 may carry the attribute indication of the Register request in the Register request message, for example, in an extended header field or parameter of the Register request message.

In the embodiment of the present invention, the mobile access gateway control apparatus 501 further determines whether the subscriber is in an attached state when receiving a rejection response to the Register request message, and if the subscriber is in the attached state, initiates a new initial Register request message again.

The mobile access gateway control apparatus is generally implemented by an MSC server Enhanced for ICS or an mAGCF. The network element in the IMS core network may be an S-CSCF, I-CSCF, or AS.

According to the embodiment of the present invention, the IMS core is able to differentiate the attribute of a Register request message and further check the legality of the message if it is a periodical Register request message, thereby avoiding refresh of the incorrect mAGCF and ensuring the call put-through rate.

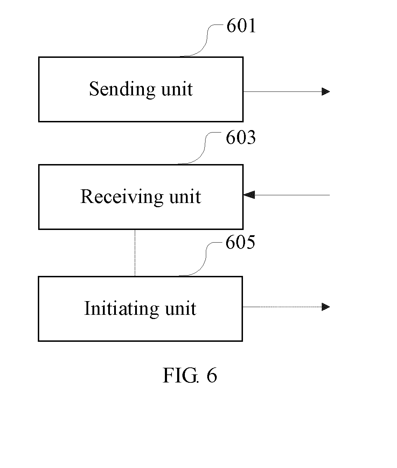

As shown in FIG. 6, an embodiment of the present invention further provides a mobile access gateway control apparatus, including:

a sending unit 601, configured to send a Register request message, which carries an identification and access network side address information of an ICS subscriber, and an attribute indication of the Register request to an ICS communication apparatus; a receiving unit 603, configured to receive a rejection message which is sent by the ICS communication apparatus and in response to the Register request message after the ICS communication apparatus determines, according to the attribute indication of the Register request, that the Register request message is a periodical Register request message and when the ICS communication apparatus determines that the access network side address information of the subscriber carried in the Register request message is different from the access network side address information of the subscriber recorded by the IMS core network.

The apparatus further includes an initiating unit 605, configured to determine whether the subscriber is in an attached state when the receiving unit 603 receives the rejection message in response to the Register request message, and if the subscriber is in the attached state, initiate an initial Register request message again.

According to the embodiment of the present invention, an attribute indication of the Register request is sent so that the IMS core network is able to differentiate the attribute of a Register request message and further check the legality of the message if it is a periodical Register request message, thereby avoiding refresh of the incorrect mAGCF and ensuring the call put-through rate.

Finally it should be noted that the "include", "comprise" and any variant of them herein indicate non-exclusive inclusion so that a procedure, method, article or device that includes a series of elements includes not only these elements but also other elements that are not explicitly listed, or also the fixed elements of the procedure, method, article, or device. Without more restrictions, an element modified by "include a/an... " does not exclude that the procedure, method, article, or device including the element includes other same elements.

Through the foregoing description of the embodiments of the present invention, persons skilled in the art may clearly understand that the present invention may be implemented through software in combination with a necessary universal hardware platform or through hardware only, but the former is a preferred implementation in most circumstances. Based on such understanding, all or part of the contributions made by the technical solutions of the present invention to the prior art may be embodied in form of a software product. The software product may be stored in a computer readable storage medium, such as a read-only memory (ROM), a random access memory (RAM), a magnetic disc, or a compact disc and includes several instructions that enable a computer device (a personal computer, a server, or a network device) to execute the methods described in all or part of the embodiments of the present invention.

Described above are the communication method, apparatus and system for IMS Centralized Services provided in the embodiments of the present invention. Although the principles and implementation modes of the present invention are described in detail through exemplary embodiments, such embodiments are only used to facilitate understanding of the methods and ideas of the present invention. It is apparent that persons of ordinary skill in the art may make various modifications and variations to the present invention without departing from the spirit and scope of the present invention. The present invention is intended to cover the modifications and variations provided that they fall within the protection scope defined by the claims or their equivalents.

**Claims**

1. An Internet Protocol Multimedia Subsystem, IMS, Centralized Services, ICS, communication method, comprising:

   receiving, by an ICS communication apparatus, a Register request message that carries an identification of an ICS subscriber and access network side address information of the subscriber;
   determining whether the Register request message is a periodical Register request message; and
   if determining that a periodical Register request message is received, judging whether the access network side address information of the subscriber carried in the Register request message is the same as access network side address information of the subscriber recorded by an IMS core network, and if the access network side address information of the subscriber carried in the Register request message is different from the access network side address information of the subscriber recorded by an IMS core network, rejecting the Register request message.

2. The method according to claim 1, further comprising:

   obtaining an attribute indication of the Register request which is used to indicate whether the Register request message is a periodical Register request message, wherein:

   the determining whether the received Register request message is a periodical Register request message comprises:

   determining, according to the attribute indication of the Register request, whether the received Register request message is a periodical Register request message.

3. The method according to claim 2, wherein the obtaining the attribute indication of the Register request comprises:

   obtaining an attribute indication of the Register request carried in the Register request message.

4. The method according to claim 3, wherein the attribute indication of the Register request is carried in the Register request message through an extended header field or parameter of the Register request message.

5. The method according to claim 3, further comprising:

   when sending the Register request of the subscriber, determining, by a mobile access gateway control apparatus, whether the Register request needed to be sent currently is a periodical Register request message or an initial Register request message, and carrying an attribute indication of the Register request in the Register request message.

6. The method according to claim 1, wherein: the access network side address information comprises address information of a Mobile Access Gateway Control Function (mAGCF); and the judging whether the access network side address information of the subscriber carried in the Register request message is the same as the access network side address information of the subscriber recorded by the IMS core network comprises:

   obtaining, according to the subscriber identification, the mAGCF address information of the subscriber recorded by the IMS core network and judging whether the mAGCF address information carried in the Register request message is the same as the mAGCF address information recorded by the IMS core network.

**7.** The method according to any one of claims 1 to 6, further comprising:

if determining that the received Register request message is not a periodical Register request message, or determining that the access network side address information of the subscriber carried in the periodical Register request message is the same as the access network side address information of the subscriber recorded by the IMS core network, executing the Register request message.

**8.** The method according to any one of claims 1 to 6, further comprising:

if receiving a rejection response message to the Register request message, determining, by a mobile access gateway control apparatus, whether the subscriber is in an attached state, and if the subscriber is in the attached state, initiating an initial Register request message again.

**9.** An Internet Protocol Multimedia Subsystem (IMS) Centralized Services (ICS) communication apparatus, comprising:

a receiving unit, configured to receive a Register request message that carries an identification of an ICS subscriber and access network side address information of the subscriber;
a first determining unit, configured to determine whether the Register request message is a periodical Register request message;
a second determining unit, configured to, when the first determining unit determines that a periodical Register request message is received, judging whether the access network side address information of the subscriber carried in the Register request message is the same as access network side address information of the subscriber recorded by an IMS core network; and
a rejecting unit, configured to reject the Register request message when the second determining unit determines that the access network side address information of the subscriber carried in the Register request message is different from the access network side address information of the subscriber recorded by the IMS core network.

**10.** The apparatus according to claim 9, wherein: the receiving unit is further configured to obtain an attribute indication of the Register request which is used to indicate whether the Register request message is a periodical Register request message; and
the first determining unit is configured to determine, according to the attribute indication of the Register request, whether the received Register request message is a periodical Register request message.

**11.** The apparatus according to claim 9, further comprising:

an executing unit, configured to execute the Register request message when the first determining unit determines that the received Register message is not a periodical Register request message, or when the second determining unit determines that the access network side address information of the subscriber carried in a periodical Register request message is the same as the access network side address information of the subscriber recorded by the IMS core network.

**12.** An Internet Protocol Multimedia Subsystem (IMS) Centralized Services (ICS) communication system, comprising:

a mobile access gateway control apparatus, configured to send a Register request message that carries an identification of an ICS subscriber and access network side address information of the subscriber; and
an ICS communication apparatus, configured to receive the Register request message, determine whether the Register request message is a periodical Register request message, and if determining that a periodical Register request message is received, judge whether the access network side address information of the subscriber carried in the Register request message is the same as access network side address information of the subscriber recorded by an IMS core network, and if the access network side address information of the subscriber carried in the Register request message is different from the access network side address information of the subscriber recorded by the IMS core network, reject the Register request message.

**13.** The system according to claim 12, wherein: the mobile access gateway control apparatus is further configured to send an attribute indication of the Register request which is used to indicate whether the Register request message is a periodical Register request message; and
the ICS communication apparatus obtains the attribute indication of the Register request and determines, according to the attribute indication of the Register request, whether the received Register request message is a periodical Register request message.

14. The system according to claim 12, wherein the mobile access gateway control apparatus is further configured to determine whether the subscriber is in an attached state when receiving a rejection response message to the Register request message, and if the subscriber is in the attached state, initiate an initial Register request message again.

15. A mobile access gateway control apparatus, comprising:

a sending unit, configured to send a Register request message, which carries an identification of an Internet Protocol Multimedia Subsystem (IMS) Centralized Services (ICS) subscriber and access network side address information of the subscriber, and an attribute indication of the Register request to an ICS communication apparatus; and
a receiving unit, configured to receive a rejection message which is sent by the ICS communication apparatus and in response to the Register request message after the ICS communication apparatus determines, according to the attribute indication of the Register request, that the Register request message is a periodical Register request message and when the ICS communication apparatus determines that the access network side address information of the subscriber carried in the Register request message is different from access network side address information of the subscriber recorded by an IMS core network.

16. The apparatus according to claim 15, further comprising:

an initiating unit, configured to determine whether the subscriber is in an attached state when the receiving unit receives the rejection message in response to the Register request message, and if the subscriber is in the attached state, initiate an initial Register request message again.

FIG. 1

EP 2 448 212 A1

201

Receive a Register request

S202

Determine whether the received Register request is a periodical Register request

No

Yes

S203

Determine whether an address in the Register request is the same as a stored address

Yes

No S204

S205

Reject the Register request

Execute the Register request

FIG. 2

EP 2 448 212 A1

| UE | Target mAGCF | Source mAGCF | I-CSCF | HSS/HLR | S-CSCF |
|----|----|----|----|----|----|

Location Update Request — S301

Location update processing: authentication procedure — S302

Location Update Response — S303

Cancel Location — S304

Initial Register request — Query message to obtain S-CSCF information — S305

S306

Forward Register request — S307

Obtain subscriber information — S308

200 OK — S309

Register request response — S310

Timer expires

Register request, carrying periodical Register request indication — S311

Query message to obtain S-CSCF information — S312

Forward periodical Register request — S313

Judge whether the Register request is a periodical Register request, and if the Register request is a periodical Register request, judge whether address information is the same — S314

403 Forbidden — S315

403 Forbidden — S316

200 OK — S317

200 OK — S318

FIG. 3

13

401

Receiving unit

403

First determining unit

405

Second determining unit

407

Rejecting unit

409

Executing unit

FIG. 4

501

Mobile access gateway control apparatus

503

ICS communication apparatus

FIG. 5

601

Sending unit

603

Receiving unit

605

Initiating unit

FIG. 6

| INTERNATIONAL SEARCH REPORT | International application No. |
|---|---|
| | PCT/CN2010/078197 |

**A. CLASSIFICATION OF SUBJECT MATTER**

H04L29/06 (2006.01)i

According to International Patent Classification (IPC) or to both national classification and IPC

**B. FIELDS SEARCHED**

Minimum documentation searched (classification system followed by classification symbols)

IPC: H04L; H04W; H04Q; H04B

Documentation searched other than minimum documentation to the extent that such documents are included in the fields searched

Electronic data base consulted during the international search (name of data base and, where practicable, search terms used)

CNPAT CNKI WPI EPODOC: IMS, IP, ID, multimedia, register+, address, request, access, period, core, network

**C. DOCUMENTS CONSIDERED TO BE RELEVANT**

| Category* | Citation of document, with indication, where appropriate, of the relevant passages | Relevant to claim No. |
|---|---|---|
| PX | CN101699811A (HUAWEI TECHNOLOGIES CO., LTD.) 28 Apr. 2010 (28.04.2010) description paragraphs 0028-0080, figures 2-6 | 1-16 |
| A | CN101291320A (ZTE CORPORATION) 22 Oct. 2008 (22.10.2008) see the whole document | 1-16 |
| A | WO2009/063474A1 (LUCENT TECHNOLOGIES INC.) 22 May 2009 (22.05.2009) see the whole document | 1-16 |
| A | WO2009/057897A1 (ELECTRONICS AND TELECOMMUNICATIONS RESEARCH INSTITUTE) 07 May 2009 (07.05.2009) see the whole document | 1-16 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 Dec. 2010 (22.12.2010) | **10 Feb. 2011 (10.02.2011)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 | ZHANG, Xiang |
| Facsimile No. 86-10-62019451 | Telephone No. (86-10)62413308 |

Form PCT/ISA /210 (second sheet) (July 2009)

**INTERNATIONAL SEARCH REPORT**
Information on patent family members

| | International application No. |
|---|---|
| | PCT/CN2010/078197 |

| Patent Documents referred in the Report | Publication Date | Patent Family | Publication Date |
|---|---|---|---|
| CN101699811A | 28.04.2010 | None | |
| CN101291320A | 22.10.2008 | None | |
| WO2009/063474 A1 | 22.05.2009 | EP2235915A1 | 06.10.2010 |
| WO2009/057897A1 | 07.05.2009 | KR20090043832A | 07.05.2009 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910110434